# FASCICULE DE BREVET EUROPEEN

(11) **EP 3 964 917 B1**
(45) Date de publication et mention de la délivrance du brevet: **19.06.2024**
(21) Numéro de dépôt: 21192125.9
(22) Date de dépôt: 19.08.2021
(51) Int. Cl.: G05G 9/047

(54) **POIGNEE DE COMMANDE AYANT AU MOINS UN IDENTIFIANT RETROECLAIRE, ET UN VEHICULE AYANT UNE COMMANDE MUNIE D'UNE TELLE POIGNEE DE COMMANDE**
STEUERGRIFF MIT MINDESTENS EINER HINTERLEUCHTETEN KENNUNG UND EIN FAHRZEUG MIT EINER STEUERUNG, DIE MIT EINEM SOLCHEN STEUERGRIFF AUSGESTATTET IST
CONTROL HANDLE HAVING AT LEAST ONE BACKLIT IDENTIFIER, AND A VEHICLE HAVING A CONTROL PROVIDED WITH SUCH A CONTROL HANDLE

(30) Priorité: 04.09.2020 FR 2009008
(43) Date de publication de la demande: 09.03.2022
(73) Titulaire: Airbus Helicopters, 13725 Marignane Cedex (FR)
(72) Inventeur: FERRIGNO, Frédéric, 13820 ENSUES-LA-REDONNE (FR)
(74) Mandataire: GPI Brevets

(56) Documents cités:
- EP-A1- 0 625 102
- EP-A1- 1 246 040

## Description

La présente invention concerne une poignée de commande ayant au moins un identifiant rétroéclairé et son procédé de fabrication, ainsi qu'un véhicule ayant une commande munie d'une telle poignée de commande.

Un aéronef, tel que par exemple un giravion, comporte au moins une commande de vol munie d'une poignée de commande. Par exemple, un hélicoptère comporte une commande de vol cyclique pour piloter cycliquement le pas des pales d'au moins un rotor principal. La commande cyclique comporte un manche de pas cyclique portant une poignée de commande qui est qualifiée de « poignée de cyclique » par commodité.

Un hélicoptère comporte aussi une commande de vol collective pour piloter collectivement le pas de ces pales. La commande de vol collective comporte un levier de pas collectif portant une poignée de commande qui est qualifiée de « poignée de collectif » par commodité.

Selon un autre exemple, une poignée de commande peut être utilisée pour commander un système de treuillage ou tout autre système.

Chaque poignée de commande peut comprendre une pluralité d'organes de commande pour remplir diverses fonctions. Par exemple, une poignée de commande peut comprendre des boutons poussoirs, des commutateurs, des boutons mobiles en translation, une face tactile, une molette... L'expression « organe de commande » désigne par la suite un organe pouvant être sollicité ou actionné par un pilote tenant la poignée de commande pour réaliser une fonction et par exemple pour générer ou modifier un signal analogique ou numérique.

Par ailleurs, une poignée de commande peut comprendre des identifiants, formant des marquages pour identifier les divers organes de commande de cette poignée de commande.

En raison de son emplacement et des différents organes de commande devant être accessibles à un pilote, chaque poignée de commande peut avoir une forme extérieure très complexe.

Une poignée de commande peut notamment comprendre un pied et une tête. Le pied peut alors être disposé dans une paume d'une main particulière d'un pilote. La tête peut comprendre une face avant au travers de laquelle émergent des organes de commande pouvant être manoeuvrés avec le pouce de cette main particulière du pilote tenant le pied de la poignée de commande. Le pied peut avoir une forme complexe pour présenter divers organes de commande manoeuvrables avec les autres doigts voire aussi avec le pouce de cette main particulière.

Par exemple, une poignée de cyclique peut présenter une forme ergonomique complexe et comporter une dizaine d'organes de commande pour piloter une dizaine de fonctions, et par exemple pour piloter des modes de pilotage automatique, un instrument de communication radio, un téléphone de bord, le largage d'une élingue...

Chaque organe de commande est dès lors relié à au moins une connexion filaire qui chemine dans la poignée de commande. Au sein d'un aéronef, un même organe de commande peut être relié à plusieurs connexions filaires redondées par sécurité. Ainsi, une poignée de cyclique ou une poignée de collectif peut comprendre au moins une dizaine d'organes de commande et plusieurs dizaines de fils électriques voire une centaine de fils électriques.

Par suite, l'agencement d'une nouvelle fonction dans une poignée de commande existante s'avère délicat.

Par ailleurs, un véhicule, et par exemple un giravion tel un hélicoptère, peut éventuellement être utilisé de nuit.

Par suite, il peut être intéressant, voire requis, d'illuminer des parties d'une poignée de commande pour une utilisation de nuit. Certains règlements de certification peuvent requérir d'illuminer des dispositifs présents dans un cockpit dans des conditions de nuit, et notamment des marquages identifiant visuellement des organes de commande de poignées de commande pour permettre d'identifier chaque organe de commande de nuit.

Il peut être requis que l'éclairage soit de plus particulier pour par exemple ne pas perturber un pilote utilisant un système de vision nocturne connu sous l'acronyme « NVG » et l'expression anglaise « Night Vision Goggles » ou l'acronyme « JVN » et l'expression Française « Jumelles de Vision Nocturne ».

Selon une première réalisation, une poignée de commande peut comporter des étiquettes phosphorescentes. Cette solution présente la contrainte de devoir préalablement exposer les étiquettes à la lumière pour que ces étiquettes puissent restituer la lumière pendant une durée de fait limitée. De plus ces étiquettes peuvent présenter un risque de décollement.

Selon une deuxième réalisation, une plaquette rétroéclairée plane est disposée sur une face avant d'une tête d'une poignée de commande. La plaquette rétroéclairée est munie sur sa face interne d'un circuit imprimé et de diodes électroluminescentes montées en surface selon la technique dénommée « composant monté en surface » et connue sous l'acronyme CMS ou dénommée « surface mounted device » en langue anglaise et connue sous l'acronyme « SMD ». Une face externe de la plaquette rétroéclairée disposée au regard d'un utilisateur est peinte en noire et gravée pour identifier chaque organe de commande.

Selon une troisième réalisation découlant de la deuxième réalisation, la plaquette rétroéclairée n'est pas peinte et gravée mais est non peinte, laissant ainsi passer la lumière, et recouverte d'une feuille en plastique de couleur noire gravée.

La deuxième réalisation et la troisième réalisation sont intéressantes. Toutefois, si la tête comporte de nombreux organes de commande au niveau de sa face avant, il peut être difficile d'agencer des diodes électroluminescentes permettant d'éclairer sans zone d'ombre les marquages identifiant les organes de commande.

De plus, ces réalisations ne résolvent pas le problème d'éclairage des marquages identifiant des organes de commande présents sur des parties arrondies d'un corps de poignée de commande. La forme arrondie d'un tel corps rend impossible l'agencement d'une plaquette rétroéclairée.

De plus, la plaquette rétroéclairée est reliée à des fils électriques difficiles à agencer au sein d'une poignée de commande déjà complètement remplie de fils électriques.

Le document FR 3010576 décrit un module lumineux ne répondant pas à la problématique.

Le document EP 0 625 102 décrit une poignée ayant d'une part un support échangeable porteur de symboles et d'autre part des organes de signalisation lumineux pour indiquer une direction de déplacement.

Le document EP 1 246 040 décrit une poignée comprenant une source lumineuse qui s'allume ou s'éteint en fonction de la manoeuvre d'un bouton-poussoir.

La présente invention a alors pour objet de proposer une poignée de commande innovante pour rétroéclairer des marquages d'identification d'organes de commande pouvant être localisés sur le corps de poignée.

Ainsi, l'invention vise une poignée de commande comprenant un corps creux, ladite poignée de commande comprenant une pluralité d'organes de commande par exemple portés par le corps. Ladite poignée de commande comporte au moins un identifiant pour identifier visuellement au moins un organe de commande.

Par exemple, le corps est muni d'un pied prolongé par une tête.

Par ailleurs, la poignée de commande peut être une poignée de pilotage, à savoir disposé sur un organe permettant de diriger un véhicule, une poignée de commande d'un système de treuil, une poignée de commande d'un système optique...

Le corps comporte une coque translucide qui est translucide dans au moins une portion translucide à éclairer, ladite coque translucide étant interposée entre un milieu interne délimité par ledit corps et un milieu externe situé en dehors de la poignée de commande, ledit au moins un identifiant étant au regard d'une face externe de la coque translucide, ladite poignée de commande comprenant un dispositif de rétroéclairage comprenant au moins une source de lumière, ladite au moins une source de lumière étant disposée au sein de ladite coque translucide ou sur une face interne de la coque translucide pour éclairer ledit au moins un identifiant via ladite au moins une portion translucide, ladite face externe étant opaque en dehors dudit au moins un identifiant, ledit dispositif de rétroéclairage comprenant au moins une liaison de commande reliée à ladite au moins une source de lumière, ladite liaison de commande étant intégrée à la coque translucide, ladite liaison de commande étant configurée pour activer ladite au moins une source de lumière sur requête.

Chaque identifiant forme un marquage pour identifier un organe de commande, par exemple en ayant au moins un caractère permettant à un individu de connaître la fonction de l'organe de commande. Un identifiant n'est donc pas un organe signalant l'état de fonctionnement de l'organe de commande.

Le corps de la poignée de commande peut ainsi comprendre une coque dénommée « coque translucide » en raison de sa capacité à être translucide au moins localement. L'expression « coque translucide qui est translucide dans au moins une portion translucide à éclairer » signifie que la coque translucide peut être entièrement translucide ou peut comprendre au moins une portion opaque et au moins une portion translucide. Par exemple, la coque translucide comporte un matériau opaque découpé localement pour agencer dans les découpes des inserts translucides formant les portions translucides. La coque translucide peut par ailleurs comprendre une ou plusieurs parois translucides. En outre, le corps peut comprendre une coque non translucide dans des parties ne comportant pas d'identifiant.

La poignée de commande comporte ainsi un dispositif de rétroéclairage intégré à une coque translucide pour éclairer un ou plusieurs identifiants. Par exemple, chaque organe de commande est associé à son propre identifiant rétroéclairé par une ou plusieurs sources de lumière.

Lorsqu'une requête d'éclairage est émise, par exemple en manipulant un bouton, une face tactile ou autres, la ou les sources de lumière sont sollicitées par la ou les liaisons de commande pour émettre de la lumière. Le terme « chaque » est utilisé par la suite aussi bien en présence d'un unique objet associé qu'en présence de plusieurs objets associés. Ainsi, chaque source de lumière émet une lumière qui traverse une portion translucide pour illuminer chaque identifiant. Le corps même de la poignée de commande peut permettre de transmettre de la lumière vers les identifiants.

L'expression « ladite face externe étant opaque en dehors dudit au moins un identifiant » signifie que les portions de la coque translucide dépourvues d'un identifiant sont soit naturellement opaques soit rendues opaques par une peinture par exemple. Seuls les identifiants sont illuminés.

La ou les liaisons de commande et la ou les sources de lumières sont solidaires directement de la coque translucide ce qui permet d'intégrer le dispositif de rétroéclairage directement dans le corps. L'intégration de la ou des liaisons de commande dans la coque permet de contourner le manque de place éventuel au sein de la poignée de commande, notamment en présence d'un grand nombre de fils électriques dans le milieu interne. En effet, la poignée de commande peut comporter plusieurs organes de commande reliés chacun à au moins une liaison filaire cheminant dans le milieu interne. La ou les liaisons de commande sont au contraire intégrées à la coque.

Par exemple, la lumière émise par la ou les sources de lumière est conforme au standard MIL-STD3009, avec un rétroéclairage fournissant une couleur connue sous l'expression « NVIS Green B Classe B », ayant une luminance énergétique dénommée « radiance » en langue anglaise inférieure ou égale à 1.7E-10 W/cm².sr (Watt par centimètre carré et par stéradian) et une luminosité comprise entre 0 cd/m² et 3,4 cd/m² (Candela par mètre carré), plus ou moins 50 pourcents.

Par ailleurs, le dispositif de rétroéclairage peut comprendre une ou plusieurs liaisons de commande pour chaque source de lumière par sécurité, une liaison de commande pouvant rejoindre plusieurs sources de lumière.

Par ailleurs, l'invention peut permettre de disposer des identifiants au niveau de portions de la coque translucide ayant des formes complexes comme expliqué par la suite.

Ainsi, l'invention est applicable à toute poignée de commande munie d'au moins un organe de commande. Notamment, la poignée de commande peut avoir une géométrie complexe. La poignée de commande peut selon un aspect devoir comporter un identifiant dans une zone non plane ne pouvant de fait intégrer une plaquette rétroéclairée plane classique.

La poignée de commande peut de plus comporter une ou plusieurs des caractéristiques qui suivent, prises seules ou en combinaison.

Ainsi, la poignée de commande peut comprendre au moins deux identifiants. Ledit dispositif de rétroéclairage peut comporter au moins une source de lumière par identifiant reliée à ladite liaison de commande.

Une même liaison de commande est reliée à plusieurs sources de lumière, voire à toutes les sources de lumière.

Selon une première réalisation de la ou de plusieurs sources de lumière, ladite au moins une source de lumière peut comporter au moins une diode électroluminescente montée en surface de la face interne de la coque translucide, ladite au moins une liaison de commande comprenant au moins une piste conductrice électriquement intégrée à la coque translucide.

Indépendamment du nombre de sources de lumière, au moins une voire chaque source de lumière peut comprendre une ou plusieurs diodes électroluminescentes alimentées électriquement par une ou plusieurs pistes conductrices électriquement de la coque translucide. Une technologie dite « plastronique » peut être utilisée pour intégrer une piste de cuivre directement sur la face interne de la coque translucide. En particulier, un des procédés suivants peut être utilisé : injection bi-matière métallisable, métallisation par voie chimique, structuration directe laser connue aussi sous l'acronyme LDS et l'expression anglaise « Laser Direct Structuring ». Cette dernière méthode consiste à ménager une gorge avec un laser dans la coque translucide au niveau de sa face interne et de déposer une couche de métallisation dans cette gorge.

Selon une deuxième réalisation, au moins une voire chaque source de lumière comporte une fibre optique de sortie configurée pour transmettre une lumière vers la coque translucide, ladite au moins une liaison de commande comprenant au moins un diffuseur optique débouchant sur la fibre optique de sortie.

Un diffuseur optique peut comprendre un générateur de lumière voire une liaison électrique alimentant le générateur de lumière et/ou une fibre optique et/ou un connecteur optique par exemple.

De la même façon que pour la première réalisation, le cheminement d'une fibre optique dans le corps de la poignée de commande permet de l'agencer dans un environnement encombré.

Il est envisageable d'avoir au moins un circuit d'éclairage réalisé selon la première réalisation et au moins un circuit d'éclairage réalisé selon la deuxième réalisation au sein d'une même poignée de commande.

Selon un autre aspect compatible avec les précédents, la coque translucide peut comprendre au moins deux parois translucides disposées l'une à cotée de l'autre et comprenant chacune au moins une portion translucide, ladite au moins une liaison de commande pouvant comporter au moins deux tronçons intégrés respectivement aux deux parois translucides et une connexion, électrique ou optique suivant la nature des tronçons, liant lesdits deux tronçons.

Dans le cadre de la première réalisation, une connexion filaire peut par exemple relier deux circuits électriques.

Dans le cadre de la deuxième réalisation, la connexion peut par exemple consister à sensiblement aligner deux tronçons de fibres optiques.

De façon complémentaire ou alternative, ladite coque translucide peut comprendre au moins deux parois translucides comprenant chacune au moins une portion translucide à rétroéclairer. Ledit dispositif de rétroéclairage peut comporter au moins un circuit d'éclairage par paroi translucide, chaque circuit d'éclairage comprenant au moins une dite source de lumière et au moins une dite liaison de commande.

Eventuellement et notamment en présence de sources de lumière de type fibre optique, il peut être avantageux de prévoir plusieurs circuits d'éclairage.

Selon un autre aspect compatible avec les précédents, ladite au moins une liaison de commande peut comprendre un connecteur configuré pour être relié à un réseau n'appartenant pas à ladite poignée de commande.

Un tel connecteur, électrique ou optique, peut être connecté à un circuit de commande n'appartenant pas à la poignée de commande.

Dans le cadre de la première réalisation d'une source de lumière, un connecteur électrique est par exemple relié à un circuit d'alimentation électrique alimenté avec un courant électrique présentant une tension électrique de 28 Volts. Ce circuit électrique peut comprendre un interrupteur. En fermant l'interrupteur, un individu ou une unité de surveillance alimente électriquement les sources de lumière. Par exemple, un tel connecteur peut être un connecteur de type fil à carte, monté en surface et relié à au moins un fil de la liaison de commande.

Dans le cadre de la deuxième réalisation d'une source de lumière, le connecteur peut être un connecteur optique usuel monté en surface est apte à être relié à un générateur de lumière.

Selon un autre aspect compatible avec les précédents, ladite face externe est peinte partiellement avec une peinture non translucide au moins au niveau de ladite au moins une portion translucide, ledit au moins un identifiant étant formé dans une zone non peinte de ladite au moins une portion translucide.

La peinture recouvrant le corps empêche la diffusion de la lumière, à l'exception de fait des zones comprenant des identifiants ou devant accueillir des identifiants. Par exemple, la peinture est une peinture noire mat, voire en accord avec la norme FED-STD-595C par exemple une peinture connue sous le code 37031, ou RAL Classic par exemple code 9011.

Pour obtenir de telles zones, la coque translucide peut être entièrement ou localement peinte, puis la peinture peut être retirée dans la ou lesdites zones par exemple par gravure avec un laser, éventuellement par une machine de gravure de marque Gravograph°. Il est alors possible de disposer un identifiant dans des zones ayant des formes complexes.

Selon une première variante d'obtention des identifiants, ladite au moins une zone non peinte peut former au moins un caractère dudit au moins un identifiant.

Par exemple, un graveur laser peut retirer la peinture localement pour graver des caractères de l'identifiant directement dans la peinture sur la paroi externe de la poignée de commande, et par exemple une suite de lettres.

Selon une deuxième variante d'obtention des identifiants, au moins une feuille comprend une gravure traversant de part en part la feuille selon une direction d'épaisseur, ladite gravure représentant un dit identifiant, ladite feuille étant disposée dans ladite au moins une zone.

Selon cette variante, une feuille, par exemple en plastique, est gravée. Cette feuille est ensuite disposée dans une dite zone, par exemple en étant collée à la coque translucide. Cette deuxième variante est notamment intéressante lorsque les formes de la coque translucide rendent difficiles la gravure d'une suite de lettres ou autres dans la peinture.

Quelle que soit la variante, les gravures peuvent être réalisées par exemple en conformité avec la norme SPM000A0907E99 ou un équivalent, notamment en termes de dimensions, de police, de profondeur des caractères gravés.

Selon un autre aspect compatible avec les précédents, ladite coque translucide peut comporter du polycarbonate translucide blanc ou un matériau équivalent.

Un tel matériau permet de transmettre la lumière produite par la ou les sources de lumière.

La coque translucide peut comporter uniquement du polycarbonate blanc et être dimensionnée pour avoir une résistance mécanique aux efforts sensiblement égale au plastique injecté renforcé à 65% de fibre de verre connu sous la dénomination GRIVORY GVX-65H.

Alternativement, la coque translucide peut comporter une matière non translucide chargée, telle que ce matériau connu sous la dénomination GRIVORY GVX-65H d'une couleur noire mat. Localement, ce matériau non translucide peut être découpé et remplacé par une portion en polycarbonate translucide blanc.

Selon un autre aspect compatible avec les précédents, le corps pouvant être muni d'un pied prolongé par une tête, ladite tête et ledit pied peuvent comporter chacun au moins un dit organe de commande et au moins un identifiant rétroéclairé par le dispositif de rétroéclairage.

En effet, l'invention permet de rétroéclairer des identifiants sur des formes complexes.

Par ailleurs, l'invention vise aussi un véhicule muni d'une poignée de commande selon l'invention.

Par exemple, ledit véhicule peut être un giravion qui comporte un rotor participant au moins à la sustentation de ce giravion, ladite poignée de commande étant agencée sur une commande, ladite commande étant un manche de pas cyclique configuré pour modifier cycliquement un pas de pales dudit rotor ou un levier de pas collectif configuré pour modifier collectivement ledit pas.

La poignée de commande peut être une poignée de commande d'un autre type, et par exemple une poignée de commande d'un système de treuillage, une poignée de commande d'un phare...

L'invention vise en outre un procédé de fabrication d'une telle poignée de commande. Ce procédé comprend les étapes suivantes :
- réalisation d'au moins un identifiant au niveau d'une face externe de ladite coque translucide, par exemple en appliquant une des variantes précédemment décrites,
- agencement d'une dite au moins une source de lumière au regard dudit au moins un identifiant, et intégration de ladite liaison de commande à ladite coque translucide.

Selon une possibilité, ladite réalisation d'au moins un identifiant au niveau d'une face externe de ladite coque translucide comporte les étapes suivantes :
- peinture au moins partielle de la face externe avec une peinture non translucide, et donc peinture de l'intégralité ou d'une partie de la face externe avec une peinture non translucide,
- retrait local de ladite peinture par gravure laser pour former au moins un caractère dudit au moins un identifiant, ou retrait de la peinture dans une zone et agencement dans ladite zone et contre la face externe d'une feuille, par exemple plastique, comprenant une gravure formant ledit au moins un identifiant.

Dans ce cas, la gravure peut traverser de part en part la feuille selon une direction d'épaisseur ou peut permettre uniquement de dépolir une peinture de la feuille en surface pour former un identifiant.

La mise en place d'un dispositif de rétroéclairage intégré à une coque translucide couplée éventuellement à la gravure laser sur des formes complexes de la peinture et éventuellement d'une feuille, permet d'obtenir une poignée de commande innovante répondant à un besoin longtemps exprimé.

L'invention et ses avantages apparaîtront avec plus de détails dans le cadre de la description qui suit avec des exemples donnés à titre illustratif en référence aux figures annexées qui représentent :
la figure 1, une vue partielle éclatée d'une poignée de commande selon l'invention par exemple utilisée sur une commande d'un véhicule,
la figure 2, une coupe locale d'une coque translucide munie d'une portion translucide et d'une portion opaque,
la figure 3, une coupe locale d'une coque translucide munie d'une diode électroluminescente,
la figure 4, une coupe locale d'une coque translucide munie d'une fibre optique,
la figure 5, une vue d'une feuille gravée formant un identifiant,
la figure 6, une vue en trois dimensions d'un exemple de poignée de commande,
la figure 7, une vue de face de la poignée de commande de la figure 6 rendue partiellement transparente, avec un dispositif de rétroéclairage à diodes électroluminescentes,
la figure 8, une vue de côté de la poignée de commande de la figure 6 rendue partiellement transparente, avec un dispositif de rétroéclairage à diodes électroluminescentes,
la figure 9, une vue de face d'un exemple de poignée de commande, avec un dispositif de rétroéclairage à fibre optique, à un seul générateur de lumière
la figure 10, une vue de face d'un exemple de poignée de commande, avec un dispositif de rétroéclairage à fibre optique, à plusieurs générateurs de lumière,
la figure 11, un schéma illustrant un procédé de fabrication d'une poignée de commande.

Les éléments présents dans plusieurs figures distinctes sont affectés d'une seule et même référence.

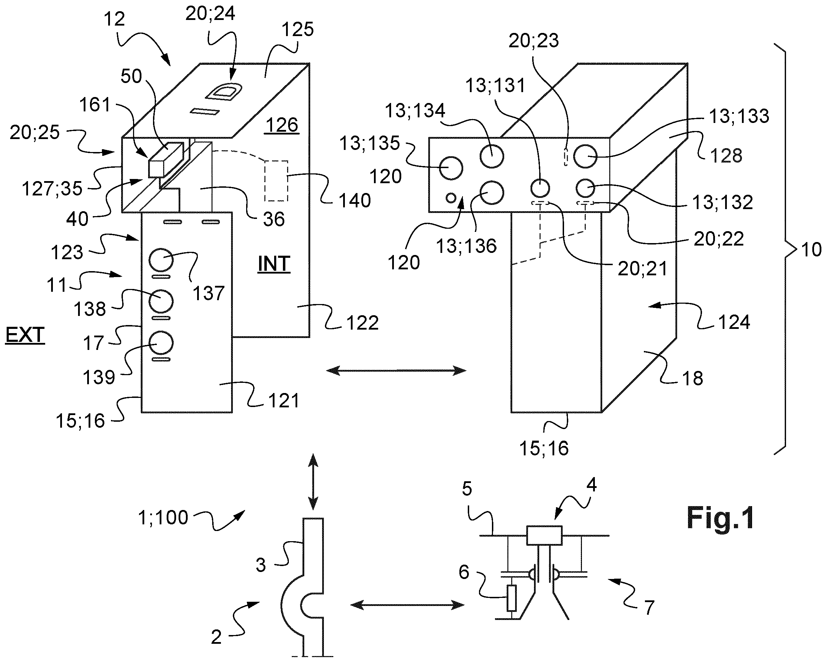

La figure 1 présente une vue partielle éclatée d'un exemple d'une poignée de commande 10 selon l'invention.

Selon la figure 1 et quelle que soit la poignée de commande, cette poignée de commande 10 peut être agencée au sein d'un véhicule 1. Par exemple, la poignée de commande 10 peut être portée par un élément porteur 3 d'une commande 2, tel qu'un levier selon l'illustration fournie ou un manche.

Par exemple, au sein d'un véhicule 1 de type giravion 100, la commande 2 peut être un manche de pas cyclique configuré pour modifier cycliquement un pas de pales 5 d'un rotor 4 ou un levier de pas collectif configuré pour modifier collectivement ledit pas. Selon l'alternative de la figure 1, la commande 2 peut être à cet effet reliée à une pluralité de servocommandes 6 reliées chacune à un ensemble de plateaux cycliques 7, cet ensemble de plateaux cycliques 7 étant lui-même relié par des bielles de pas aux pales 5.

Bien évidemment, cet agencement de la poignée de commande 10 est un exemple, la poignée de commande 10 pouvant être agencée au sein de tout type de systèmes.

Selon un autre aspect, quelle que soit la poignée de commande 10, une poignée de commande 10 selon l'invention comporte un corps 15. Le corps 15 peut être muni d'un pied 11 prolongé par une tête 12. Le pied 11 est configuré pour être positionné dans la paume d'une main, alors que la tête 12 est configurée notamment pour avoir une face avant 120 pouvant être atteinte avec le pouce de cette main.

Par ailleurs, le corps 15 est creux. Dès lors, le corps 15 délimite un milieu interne INT, opposé à un milieu externe EXT situé en dehors du corps 15.

De plus, la poignée de commande 10 comporte une pluralité d'organes de commande 13. Lorsque l'expression organe de commande est associée à la référence 13 alors cette expression ne désigne pas un organe de commande particulier. Par contre, les références 131-140 désignent chacune un organe de commande particulier. Les divers organes de commande peuvent prendre diverses formes, telles qu'un bouton poussoir, un bouton en forme de sapin mobile sensiblement en rotation autour de deux axes, une gâchette, une face tactile, une molette mobile en rotation selon un axe, un bouton mobile en translation... Les organes de commande sont représentés schématiquement par des cercles sur la figure 1 indépendamment de leur géométrie réelle.

Des organes de commande 131-136 sont par exemple situés au niveau de la tête 12 du corps 15, et par exemple au niveau de la face avant 120. D'autres organes de commande 137-140 sont situés sur le pied 11, soit par exemple sensiblement sur une facette avant 121 soit par exemple sur une facette arrière 122.

Par ailleurs, la poignée de commande 10 peut comprendre de multiples fils reliés aux divers organes de commande. Par exemple, plusieurs dizaines de fils sont reliés aux dix organes de commande représentés et s'étendent dans le corps 15 pour sortir du milieu interne INT par une ouverture d'une embase du corps 15.

Par ailleurs, la poignée de commande 10 comporte au moins un identifiant 20 pour identifier visuellement au moins un organe de commande 13. Le terme identifiant désigne un marquage pouvant prendre la forme d'une suite de caractères, ces caractères pouvant comprendre des chiffres, des lettres ou des caractères plus complexes comme des pictogrammes par exemple. Lorsque le terme identifiant est associé à la référence 20 alors ce terme ne désigne pas un identifiant particulier. Par contre, les références 21-30 désignent chacune un identifiant particulier.

Par exemple, la poignée de commande 10 comporte un identifiant 21-30 respectivement pour chaque organe de commande 131-140.

Chaque identifiant 20 est positionné en regard du milieu externe EXT, pour être visible par un individu tenant la poignée de commande 10, et d'une face externe au niveau d'une portion translucide du corps.

En effet, le corps 15 peut être au moins partiellement réalisé avec un matériau translucide, tel que du polycarbonate blanc par exemple, pour coopérer avec un dispositif de rétroéclairage 40.

Ainsi, le corps 15 comporte une coque dénommée coque translucide 16 dans la mesure où cette coque est au moins translucide dans des portions translucides 161.

Selon l'exemple de la figure 1, la coque translucide 16 peut être entièrement translucide.

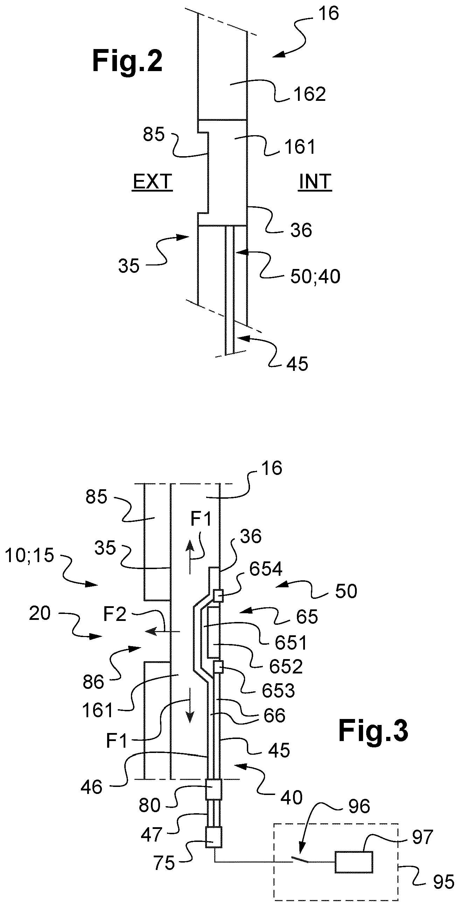

Selon l'exemple de la figure 2, la coque translucide 16 comporte au moins une portion opaque 162 et au moins une portion translucide 161.

Indépendamment de cet aspect, la coque translucide 16 est interposée entre le milieu interne INT et le milieu externe EXT pour transmettre une lumière émise par le dispositif de rétroéclairage 40 vers les identifiants 20. A cet effet, chaque identifiant 20 peut être localisé au regard d'une face externe 35 de la coque translucide 16 au niveau d'une portion translucide 161 alors que le dispositif de rétroéclairage 40 émet de la lumière au niveau d'une face interne 36 de la coque translucide 16 voire au sein de la coque translucide 16.

La coque translucide 16 peut comprendre une ou plusieurs parois translucides 17, 18. Le terme paroi est à interpréter au sens large en désignant un organe pouvant comprendre une ou plusieurs faces planes et/ou courbes.

L'exemple de la figure 1 comporte deux parois translucides 17, 18. Une première paroi 17 comporte une première partie d'une facette avant 121 du pied 11, une première partie d'une facette arrière 122 du pied 11, un premier flanc latéral 123 du pied 11, un flanc latéral 127 de la tête 12, une première partie d'une face supérieure 125 de la tête 12 et une première partie d'un fond 126 de la tête 12. La deuxième paroi 18 comporte une seconde partie de la facette avant 121 du pied 11, une seconde partie d'une facette arrière 122 du pied 11, un deuxième flanc latéral 124 du pied 11, un flanc latéral 128 de la tête 12, une seconde partie de la face supérieure 125 de la tête 12 et une seconde partie du fond 126 de la tête 12, et la face avant 120.

Cette architecture est donnée à titre d'exemple. Selon un autre exemple, la face avant 120 de la tête 12 ou une autre face peut être une paroi indépendante.

Par ailleurs, le corps 15 peut comprendre uniquement une coque translucide 16 ou une coque translucide 16 et une coque opaque.

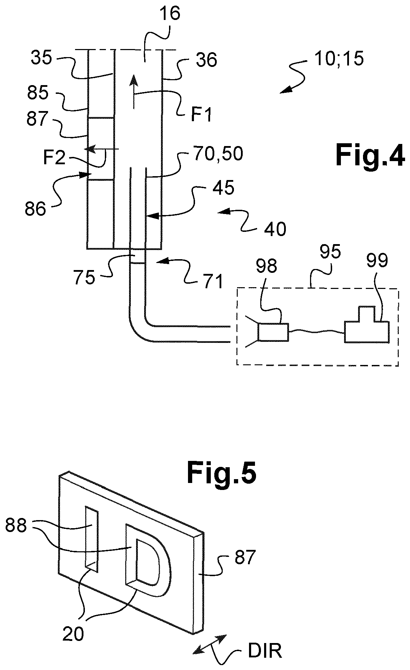

Indépendamment de la géométrie de la coque translucide 16, le dispositif de rétroéclairage 40 comprend au moins une source de lumière 50. Lorsque l'expression source de lumière est associée à la référence 50, alors cette expression ne désigne pas une source de lumière particulière. Par contre, les références 51-60 désignent chacune des sources de lumière particulières qui illuminent des identifiants 21-30 respectifs via une coque entièrement translucide 16 ou des portions translucides locales. Selon l'exemple décrit par la suite en référence aux figures 5 à 7, chaque identifiant 21-30 peut être illuminé par au moins une ou au moins deux sources de lumière 51-60 qui lui sont propres.

Indépendamment de cet aspect, et en référence à la figure 1, chaque source de lumière 50 est présente au regard d'un identifiant 20 correspondant au travers d'une portion translucide 161 de la coque translucide 16. Le terme « chaque » est utilisé pour désigner une source de lumière indépendamment du nombre de sources de lumière, la poignée de commande pouvant éventuellement avoir une seule source de lumière et un seul identifiant.

Ainsi, chaque source de lumière 50 est disposée dans l'épaisseur de la coque translucide 16 ou sur la face interne 36 de la coque translucide 16, pour éclairer un identifiant 20 via une portion translucide 161.

En outre, le dispositif de rétroéclairage 40 comprend au moins une liaison de commande 45 reliée à chaque source de lumière 50. La liaison de commande 45 représente un dispositif relié à un dispositif d'activation permettant d'activer sur requête chaque source de lumière 50 pour éclairer ou non chaque identifiant 20. La liaison de commande 45 peut être pilotée par un pilote ou un équipage via un interrupteur ou potentiomètre ou autres du dispositif d'activation. De manière alternative ou complémentaire, la liaison de commande 45 peut être pilotée par une unité de traitement du dispositif d'activation, par exemple en fonction d'un signal provenant d'un capteur de luminosité.

Selon un exemple, un dispositif d'activation comporte un panneau d'éclairage qui permet de gérer divers éclairages en même temps via un bus d'éclairage. La liaison de commande est reliée ou intégrée au bus d'éclairage. Par exemple, le panneau d'éclairage comporte un interrupteur pour alimenter électriquement sur requête la liaison de commande via le bus d'éclairage.

Selon un autre aspect, la liaison de commande 45 est intégrée à la coque translucide 16.

Les figures 3 à 5 illustrent diverses manières de réaliser chaque identifiant 20 et chaque source de lumière 50.

Selon l'exemple de la figure 3, une voire plusieurs voire chaque source de lumière 50 comportent chacune au moins une diode électroluminescente 65 montée en surface de la coque translucide 16 au niveau de sa face interne 36. Par exemple, la coque translucide 16 comporte un renfoncement dans lequel est agencée la diode électroluminescente 65. Ainsi, une lentille 651 de la diode électroluminescente 65 est disposée en vis-à-vis d'un identifiant 20. Un substrat 652 de la diode électroluminescente 65 peut être monté pour sensiblement affleurer la face interne 36.

Dès lors, la liaison de commande 45 comprend au moins une piste 66 conductrice électriquement intégrée à la coque translucide 16 et reliée électriquement à une cathode 653 et au moins une autre piste 66 conductrice électriquement reliée à une anode 654 de la diode électroluminescente 65.

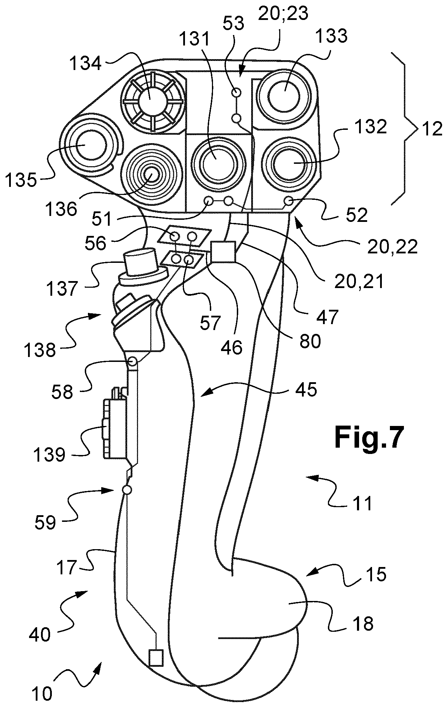

Lorsque la liaison de commande 45 s'étend sur deux parois translucides 17, 18 différentes, la liaison de commande 45 peut comporter au moins deux tronçons 46, 47 formés chacun respectivement par au moins une piste électriquement conductrice. Un premier tronçon 46 comporte alors au moins une piste électriquement conductrice intégrée à la première paroi translucide 17. De même, un deuxième tronçon 47 comporte au moins une piste électriquement conductrice intégrée à la deuxième paroi translucide 18. De plus, une connexion 80 de type connexion électrique classique peut relier électriquement les pistes électriquement conductrices des deux tronçons 46,47. Une telle connexion 80 est illustrée sur la figure 7. Une telle connexion 80 peut par exemple comprendre au moins un fil électrique ou équivalent.

En outre, la piste 66 conductrice électriquement peut déboucher sur un connecteur 75, par exemple de type connecteur électrique dans ce cas. Le connecteur 75 est par exemple monté en surface de la face interne 36 selon l'exemple de la figure 3.

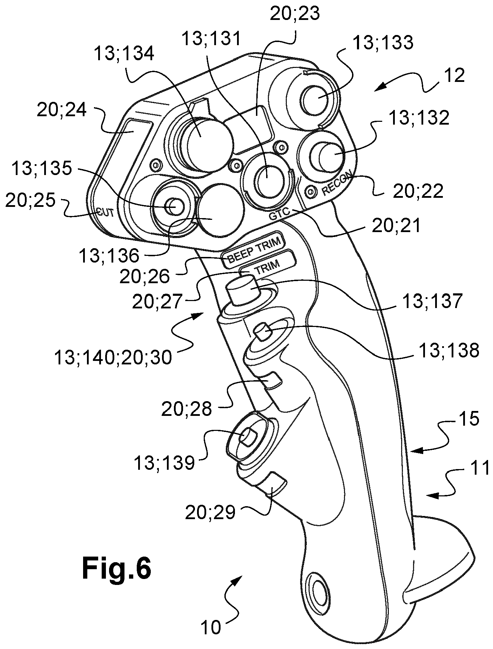

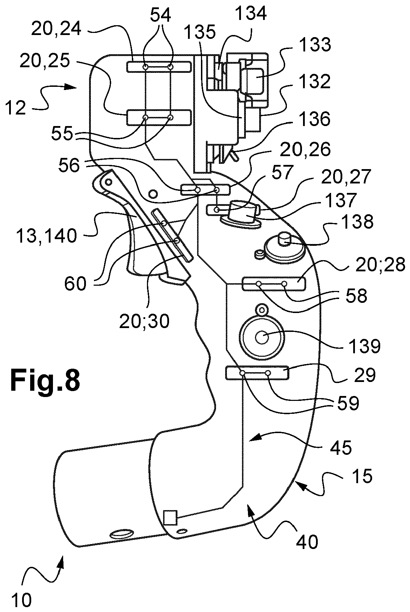

Les figures 6, 7 et 8 illustrent une poignée de commande 10 de ce type, la poignée de commande 10 étant rendue partiellement transparente pour faire apparaître divers éléments du dispositif de rétroéclairage 40.

De plus et en référence à la figure 3, ce connecteur électrique 75 peut être relié électriquement à un réseau électrique comprenant un dispositif 95 d'activation pour activer sur requête l'illumination de chaque source de lumière. Un tel dispositif 95 d'activation peut comprendre par exemple une source d'énergie électrique 97 et un interrupteur 96 ou équivalent (un potentiomètre par exemple). Un tel dispositif 95 peut être externe à la poignée de commande. Dès lors, chaque diode électroluminescente 65 peut émettre une lumière sur requête. Une partie F1 de la lumière est transmise dans une portion translucide 161 de la coque translucide 16 et une partie F2 de cette lumière s'échappe du corps 15 via les identifiants de manière à les illuminer.

Selon l'exemple de la figure 4, une voire plusieurs voire chaque source de lumière 50 comporte une fibre optique de sortie 70. Dès lors, la liaison de commande 45 comprend au moins un diffuseur optique 71 débouchant sur au moins une fibre optique de sortie 70. Chaque diffuseur optique 71 peut comprendre une fibre optique de liaison intégrée à la face interne 36 de la coque translucide 16, en étant noyée dans cette coque 16 ou en étant disposée sur la face interne 36, un générateur de lumière, une liaison électrique reliée à un générateur de lumière, une lentille...

Par exemple, le diffuseur optique 71 peut comprendre un connecteur 75 relié aux fibres optiques de sortie, par exemple un connecteur optique monté en surface de la face interne 36 selon l'exemple de la figure. De plus, ce connecteur optique 75 peut être relié électriquement par exemple à un réseau optique comprenant un dispositif 95 d'activation pour activer sur requête l'illumination de chaque source de lumière 50. Un tel dispositif 95 d'activation peut comprendre par exemple un générateur de lumière 98, telle qu'une lampe ou un laser, et un interrupteur 99 ou un potentiomètre ou équivalent commandant le générateur de lumière 98. Dès lors, chaque fibre optique de sortie 70 peut transmettre une lumière sur requête. Une partie F1 de la lumière est transmise dans la coque translucide 16 et une partie F2 de cette lumière s'échappe du corps 15 via les identifiants 20.

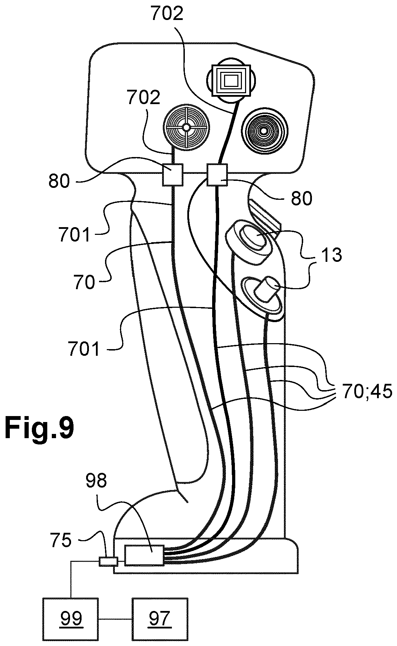

Selon un autre exemple, la poignée de commande peut comprendre un générateur de lumière 98 et un connecteur électrique 75 alimentant électriquement le générateur de lumière 98, via un interrupteur éventuellement. Le générateur de lumière 98 peut alors être intégré à la poignée de commande 10 et peut déboucher directement sur la ou des fibres optiques de sortie 70. La figure 9 illustre une telle poignée de commande 10, la poignée de commande 10 étant rendue partiellement ou totalement transparente pour faire apparaître les fibres optiques de sortie 70 notamment.

Lorsque la liaison de commande 45 s'étend sur deux parois translucides différentes, la liaison de commande 45 peut comprendre au moins deux tronçons 701, 702 formés par deux fibres optiques de liaison intégrées respectivement aux deux parois translucides. De plus, une connexion 80 de type connexion optique classique peut relier optiquement les deux tronçons. Une telle connexion comporte par exemple au moins une lentille et/ou peut consister à aligner les deux tronçons.

Alternativement, la poignée de commande 10 peut comprendre plusieurs circuits d'éclairage du type précédemment décrit.

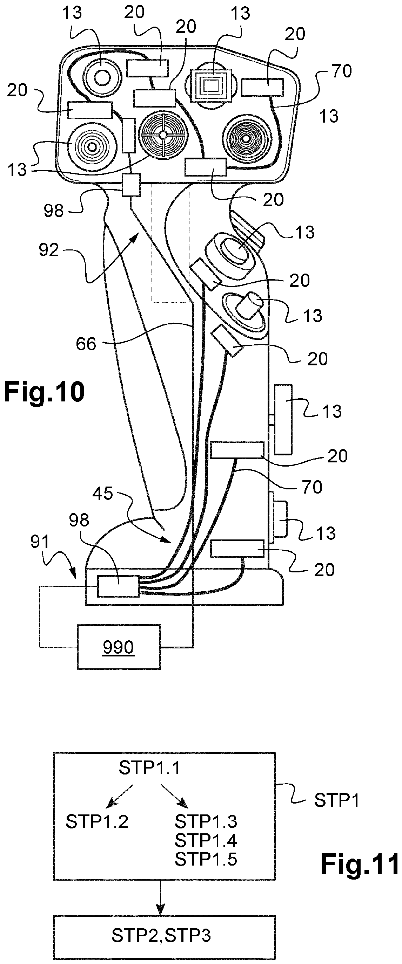

Selon l'exemple de la figure 10, un premier circuit d'éclairage 91 comporte un premier générateur de lumière 98 disposé sur le pied 11 du corps 15. Ce premier générateur de lumière 98 génère une lumière transmise dans les fibres optique de sortie qui illuminent alors divers identifiants 20 du pied 11.

Un deuxième circuit d'éclairage 92 comporte un deuxième générateur de lumière 98 disposé sur la face avant 120 de la tête 12 du corps 15 alimentée électriquement par une piste électrique 66 intégrée à la coque translucide 16, et éventuellement par un connecteur électrique. Ce deuxième générateur de lumière 98 alimente au moins une fibre optique de sortie 70 illuminant divers identifiants 20 de la face avant 120.

Les deux circuits d'éclairage 91,92 sont contrôlés par exemple par un même organe de commande 990, qui peut être externe à la poignée de commande.

Selon un autre aspect et en référence à la figure 3 ou à la figure 4, au moins un identifiant 20 peut être réalisé en appliquant une peinture non translucide, à savoir opaque, sur la face externe de la coque translucide 16.

Ainsi, cette face externe 35 est alors peinte avec une peinture 85 non translucide, chaque identifiant 20 étant matérialisé dans une zone 86 non peinte de la face externe 35.

Selon une méthode, la face externe 35 est entièrement peinte puis la peinture est enlevée par des procédés de gravure laser par exemple dans lesdites zones.

Selon une variante illustrée sur la figure 2, et indépendamment de la nature des sources de lumière 50, la peinture peut être gravée dans une zone pour former les caractères d'un identifiant 20. Les caractères gravés constituent l'identifiant. Par exemple, un graveur enlève localement la peinture pour écrire les caractères « IDENTIFIANT » de l'identifiant.

De manière alternative ou complémentaire, des zones peuvent être dénuées de peinture, sans former les caractères d'un identifiant 20. Par exemple et au niveau d'une portion translucide 161, une surface rectangulaire de la face externe 35 n'est pas recouverte de peinture dans une telle zone.

Dès lors et en référence à la figure 5, une feuille 87, par exemple en plastique, est gravée pour présenter une gravure 88. La gravure consiste à former des lumières traversant de part en part la feuille 87 selon une direction d'épaisseur DIR, les lumières formants les caractères d'un identifiant 20. Conformément à la figure 4, la feuille 87 est alors disposée dans une zone dépourvue de peinture, par exemple en étant collée à la face externe 35 de la coque translucide 16 au droit d'une portion translucide.

Indépendamment de la manière de réaliser les sources de lumière 50 et les identifiants 20, lorsque la liaison de commande 45 est activée, chaque source de lumière 50 émet une lumière. La lumière se propage dans la coque translucide 16 et sort du corps 15 par les passages non peint formant les identifiants 20. Un individu peut alors visualiser les identifiants 20.

La figure 11 illustre un procédé de fabrication d'une poignée de commande 10 selon l'invention. Les diverses étapes peuvent être réalisées dans des ordres divers.

Ce procédé comprend ainsi une étape de réalisation STP1 d'au moins un identifiant 20 au niveau d'une face externe 35 de la coque translucide 16, au droit d'une portion translucide.

Par exemple, cette étape de réalisation STP1 d'au moins un identifiant 20 comporte une étape de peinture STP1.1 de l'intégralité ou d'une partie de la face externe 35 avec une peinture 85 non translucide.

Dès lors, l'étape de réalisation STP1 d'au moins un identifiant 20 comporte :
- soit une étape de retrait STP1.2 local de la peinture 85 par gravure laser pour former chaque caractère d'un identifiant 20, ou
- soit une étape de retrait STP1.3 de la peinture 85 dans une zone 86, une étape de fabrication STP1.4 d'une feuille 87 gravée comprenant une gravure formant des caractères de l'identifiant, et une étape d'agencement STP1.5 dans ladite zone 86 et contre la face externe 35 de cette feuille 87.

Dans ce dernier cas, la gravure peut traverser de part en part la feuille 87 selon une direction d'épaisseur DIR allant du milieu extérieur vers la coque 16 ou peut simplement consister à dépolir la feuille localement pour former le ou les caractères de l'identifiant.

Par ailleurs, le procédé comporte une étape d'agencement STP2 de chaque source de lumière 50 au regard d'un identifiant 20, et une étape d'intégration STP3 d'au moins une liaison de commande 45 à ladite coque translucide 16.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, la fibre optique illustrée sur la figure 2 ou la figure 5 peut être remplacée par une diode électroluminescente. Selon un autre exemple, la diode électroluminescente illustrée sur la figure 3 peut être remplacée par une fibre optique. Selon un autre exemple, les fibres optiques des figures 9 et 10 peuvent être en tout ou partie remplacées par des liaisons électriques et des diodes électroluminescentes. Selon un autre exemple, une poignée de commande peut comprendre un circuit comprenant au moins une diode électroluminescente et un circuit comprenant au moins une fibre optique.

## Revendications

1. Poignée de commande (10) comprenant un corps (15) creux, ladite poignée de commande (10) comprenant une pluralité d'organes de commande (13), ladite poignée de commande (10) comporte au moins un identifiant (20) pour identifier visuellement au moins un organe de commande (13),
**caractérisée en ce que** ledit corps (15) comporte une coque translucide (16) qui est translucide dans au moins une portion translucide (161) à éclairer, ladite coque translucide (16) étant interposée entre un milieu interne (INT) délimité par ledit corps (15) et un milieu externe (EXT) situé en dehors de la poignée de commande (10), ledit au moins identifiant (20) étant au regard d'une face externe (35) de la coque translucide (16), ladite poignée de commande (10) comprenant un dispositif de rétroéclairage (40) comprenant au moins une source de lumière (50), ladite au moins une source de lumière (50) étant disposée au sein de ladite coque translucide (16) ou sur une face interne (36) de la coque translucide (16) pour éclairer ledit au moins un identifiant (20) via ladite au moins une portion translucide (161), ladite face externe (35) étant opaque en dehors dudit au moins un identifiant (20), ledit dispositif de rétroéclairage (40) comprenant au moins une liaison de commande (45) reliée à ladite au moins une source de lumière (50), ladite liaison de commande (45) étant intégrée à la coque translucide (16), ladite liaison de commande (45) étant configurée pour activer ladite au moins une source de lumière (50) sur requête.

2. Poignée de commande selon la revendication 1,
**caractérisée en ce que** ladite poignée de commande (10) comprend au moins deux identifiants (20), ledit dispositif de rétroéclairage (40) comporte au moins une dite une source de lumière (50) par identifiant (20) reliée à ladite liaison de commande (45).

3. Poignée de commande selon l'une quelconque des revendications 1 à 2,
**caractérisée en ce que** ladite au moins une source de lumière (50) comporte au moins une diode électroluminescente (65) montée en surface de la face interne (36) de la coque translucide (16), ladite au moins une liaison de commande (45) comprenant au moins une piste (66) conductrice électriquement intégrée à la coque translucide (16).

4. Poignée de commande selon l'une quelconque des revendications 1 à 3,
**caractérisée en ce que** ladite au moins une source de lumière (50) comporte une fibre optique de sortie (70) configurée pour transmettre une lumière vers la coque translucide (16), ladite au moins une liaison de commande (45) comprenant au moins un diffuseur optique (71) débouchant sur la fibre optique de sortie (70).

5. Poignée de commande selon l'une quelconque des revendications 1 à 4,
**caractérisée en ce que** ladite coque translucide (16) comprenant au moins deux parois translucides (17, 18) disposées l'une à cotée de l'autre et comprenant chacune au moins une portion translucide (161), ladite au moins une liaison de commande (45) comporte au moins deux tronçons (46, 47) intégrés respectivement aux deux parois translucides (17, 18) et une connexion (80) liant lesdits deux tronçons (46, 47).

6. Poignée de commande selon l'une quelconque des revendications 1 à 4,
**caractérisée en ce que** ladite coque translucide (16) comprenant au moins deux parois translucides (17, 18) comprenant chacune au moins une portion translucide, ledit dispositif de rétroéclairage (40) comporte au moins un circuit d'éclairage (91, 92) par paroi translucide (17, 18), chaque circuit d'éclairage comprenant au moins une dite source de lumière (50) et au moins une dite liaison de commande (45).

7. Poignée de commande selon l'une quelconque des revendications 1 à 6,
**caractérisée en ce que** ladite au moins une liaison de commande (45) comporte un connecteur (75) configuré pour être relié à un réseau n'appartenant pas à ladite poignée de commande.

8. Poignée de commande selon l'une quelconque des revendications 1 à 7,
**caractérisée en ce que** ladite face externe (35) est peinte partiellement avec une peinture (85) non translucide au moins au niveau de ladite au moins une portion translucide, ledit au moins un identifiant (20) étant formé dans une zone (86) non peinte de ladite au moins une portion translucide.

9. Poignée de commande selon la revendication 8,
**caractérisée en ce qu'**au moins une feuille (87) comprend une gravure (88) traversant de part en part la feuille (87) selon une direction d'épaisseur (DIR), ladite gravure (88) représentant un dit identifiant (20), ladite feuille (87) étant disposée dans ladite au moins une zone (86).

10. Poignée de commande selon la revendication 8,
**caractérisée en ce que** ladite au moins une zone (86) non peinte forme au moins un caractère dudit au moins un identifiant (20).

11. Poignée de commande selon l'une quelconque des revendications 1 à 10,
**caractérisée en ce que** ladite au moins une portion translucide comporte du polycarbonate translucide blanc.

12. Poignée de commande selon l'une quelconque des revendications 1 à 11,
**caractérisée en ce que** ledit corps (15) est muni d'un pied (11) prolongé par une tête (12), ladite tête (12) et ledit pied (11) comportent chacun au moins un dit organe de de commande (13) et au moins un identifiant (20) rétroéclairé par le dispositif de rétroéclairage (40).

13. Véhicule (1),
**caractérisé en ce que** le véhicule comporte une poignée de commande (10) selon l'une quelconque des revendications 1 à 12.

14. Véhicule selon la revendication 13,
**caractérisé en ce que** ledit véhicule (1) est un giravion (100) qui comporte un rotor (4) participant au moins à la sustentation de ce giravion (100), ladite poignée de commande est agencée sur une commande, ladite commande (2) étant un manche de pas cyclique configuré pour modifier cycliquement un pas de pales (5) dudit rotor (4) ou un levier de pas collectif configuré pour modifier collectivement ledit pas.

15. Procédé de fabrication d'une poignée de commande (10) selon l'une quelconque des revendications 1 à 12 comprenant les étapes suivantes :
- réalisation (STP1) d'au moins un identifiant (20) au niveau d'une face externe (35) de ladite coque translucide (16),
- agencement (STP2) d'une dite au moins une source de lumière (50) au regard dudit au moins un identifiant (20), et intégration (STP3) de ladite liaison de commande (45) à ladite coque translucide (16).

16. Procédé selon la revendication 15,
**caractérisée en ce que** ladite réalisation d'au moins un identifiant (20) au niveau d'une face externe (35) de ladite coque translucide (16) comporte les étapes suivantes :
- peinture (STP1.1) au moins partielle de la face externe (35) avec une peinture (85) non translucide,
- retrait (STP1.2) local de ladite peinture (85) par gravure laser pour former au moins un caractère dudit au moins un identifiant (20), ou retrait (STP1.3) de la peinture (85) dans une zone (86) et agencement (STP1.5) dans ladite zone (86) et contre la face externe (35) d'une feuille (87) comprenant une gravure formant ledit au moins un identifiant.

## Patentansprüche

1. Steuergriff (10) mit einem hohlen Körper (15), wobei der Steuergriff (10) eine Mehrzahl von Steuerelementen (13) umfasst, wobei der Steuergriff (10) mindestens eine Kennung (20) zur visuellen Identifizierung mindestens eines Steuerelements (13) aufweist,
**dadurch gekennzeichnet, dass** der Körper (15) eine lichtdurchlässige Schale (16) umfasst, die in mindestens einem zu beleuchtenden lichtdurchlässigen Abschnitt (161) lichtdurchlässig ist, dass die lichtdurchlässige Schale (16) zwischen einem von dem Körper (15) begrenzten Innenraum (INT) und einem außerhalb des Steuergriffs (10) liegenden Außenraum (EXT) angeordnet ist, dass die mindestens eine Kennung (20) einer Außenseite (35) der lichtdurchlässigen Schale (16) gegenüberliegt, dass der Steuergriff (10) eine Hinterleuchtungsvorrichtung (40) mit mindestens einer Lichtquelle (50) umfasst, dass die mindestens eine Lichtquelle (50) innerhalb der lichtdurchlässigen Schale (16) oder an einer Innenseite (36) der lichtdurchlässigen Schale (16) angeordnet ist, um die mindestens eine Kennung (20) über den mindestens einen lichtdurchlässigen Abschnitt (161) zu beleuchten, dass die Außenseite (35) außerhalb der mindestens einen Kennung (20) lichtundurchlässig ist, dass die Hinterleuchtungsvorrichtung (40) mindestens eine Steuerverbindung (45) umfasst, die mit der mindestens einen Lichtquelle (50) verbunden ist, dass die Steuerverbindung (45) in die lichtdurchlässige Schale (16) integriert ist, und dass die Steuerverbindung (45) konfiguriert ist, um die mindestens eine Lichtquelle (50) auf Anforderung zu aktivieren.

2. Steuergriff nach Anspruch 1,
**dadurch gekennzeichnet, dass** der Steuergriff (10) mindestens zwei Kennungen (20) umfasst, wobei die Hinterleuchtungsvorrichtung (40) mindestens eine besagte eine Lichtquelle (50) pro Kennung (20) umfasst, die mit der Steuerverbindung (45) verbunden ist.

3. Steuergriff nach einem der Ansprüche 1 bis 2,
**dadurch gekennzeichnet, dass** die mindestens eine Lichtquelle (50) mindestens eine Leuchtdiode (65) umfasst, die an der Oberfläche der Innenseite (36) der lichtdurchlässigen Schale (16) angebracht ist, wobei die mindestens eine Steuerverbindung (45) mindestens eine elektrische Leiterbahn (66) umfasst, die in die lichtdurchlässige Schale (16) integriert ist.

4. Steuergriff nach einem der Ansprüche 1 bis 3,
**dadurch gekennzeichnet, dass** die mindestens eine Lichtquelle (50) eine Ausgangslichtleitfaser (70) aufweist, die konfiguriert ist, um Licht zu der lichtdurchlässigen Schale (16) zu übertragen, wobei die mindestens eine Steuerverbindung (45) mindestens einen optischen Diffusor (71) aufweist, der in die Ausgangslichtleitfaser (70) mündet.

5. Steuergriff nach einem der Ansprüche 1 bis 4,
**dadurch gekennzeichnet, dass** die lichtdurchlässige Schale (16) mindestens zwei lichtdurchlässige Wände (17, 18) umfasst, die nebeneinander angeordnet sind und jeweils mindestens einen lichtdurchlässigen Abschnitt (161) umfassen, und dass die mindestens eine Steuerverbindung (45) mindestens zwei Abschnitte (46, 47), die jeweils in die beiden lichtdurchlässigen Wände (17, 18) integriert sind, und eine Verbindung (80) umfasst, die die beiden Abschnitte (46, 47) miteinander verbindet.

6. Steuergriff nach einem der Ansprüche 1 bis 4,
**dadurch gekennzeichnet, dass** die lichtdurchlässige Schale (16) mindestens zwei lichtdurchlässige Wände (17, 18) mit jeweils mindestens einem lichtdurchlässigen Abschnitt umfasst, dass die Hinterleuchtungsvorrichtung (40) mindestens eine Beleuchtungsschaltung (91, 92) pro lichtdurchlässiger Wand (17, 18) umfasst, und dass jede Beleuchtungsschaltung mindestens eine besagte Lichtquelle (50) und mindestens eine besagte Steuerverbindung (45) umfasst.

7. Steuergriff nach einem der Ansprüche 1 bis 6,
**dadurch gekennzeichnet, dass** die mindestens eine Steuerverbindung (45) einen Verbinder (75) aufweist, der konfiguriert ist, um mit einem nicht zu dem Steuergriff gehörigen Netz verbunden zu werden.

8. Steuergriff nach einem der Ansprüche 1 bis 7,
**dadurch gekennzeichnet, dass** die Außenseite (35) zumindest an dem mindestens einen lichtdurchlässigen Abschnitt teilweise mit einer nicht lichtdurchlässigen Farbe (85) lackiert ist, und dass die mindestens eine Kennung (20) in einem nicht lackierten Bereich (86) des mindestens einen lichtdurchlässigen Abschnitts ausgebildet ist.

9. Steuergriff nach Anspruch 8,
**dadurch gekennzeichnet, dass** mindestens eine Folie (87) eine Gravur (88) umfasst, die die Folie (87) entlang einer Dickenrichtung (DIR) durchquert, wobei die Gravur (88) eine besagte Kennung (20) darstellt, und die Folie (87) in dem mindestens einen Bereich (86) angeordnet ist.

10. Steuergriff nach Anspruch 8,
**dadurch gekennzeichnet, dass** der mindestens eine nicht lackierte Bereich (86) mindestens ein Zeichen der mindestens einen Kennung (20) bildet.

11. Steuergriff nach einem der Ansprüche 1 bis 10,
**dadurch gekennzeichnet, dass** der mindestens eine lichtdurchlässige Abschnitt weißes lichtdurchlässiges Polycarbonat umfasst.

12. Steuergriff nach einem der Ansprüche 1 bis 11,
**dadurch gekennzeichnet, dass** der Körper (15) mit einem Fuß (11) versehen ist, der durch einen Kopf (12) verlängert ist, wobei der Kopf (12) und der Fuß (11) jeweils mindestens ein besagtes Steuerelement (13) und mindestens eine von der Hinterleuchtungsvorrichtung (40) hinterleuchtete Kennung (20) umfassen.

13. Fortbewegungsmittel (1),
**dadurch gekennzeichnet, dass** das Fortbewegungsmittel einen Steuergriff (10) nach einem der Ansprüche 1 bis 12 aufweist.

14. Fortbewegungsmittel nach Anspruch 13,
**dadurch gekennzeichnet, dass** das Fortbewegungsmittel (1) ein Drehflügler (100) ist, der einen Rotor (4) aufweist, der zumindest am Auftrieb dieses Drehflüglers (100) beteiligt ist, wobei der Steuergriff an einer Steuerung angeordnet ist, wobei die Steuerung (2) ein Steuerknüppel für den zyklischen Anstellwinkel, der konfiguriert ist, um einen Anstellwinkel der Blätter (5) des Rotors (4) zyklisch zu verändern, oder ein Steuerknüppel für den kollektiven Anstellwinkel ist, der konfiguriert ist, um den Anstellwinkel kollektiv zu verändern.

15. Verfahren zur Herstellung eines Steuergriffs (10) nach einem der Ansprüche 1 bis 12, mit den Schritten:
- Herstellen (STP1) mindestens einer Kennung (20) an einer Außenseite (35) der lichtdurchlässigen Schale (16),
- Anbringen (STP2) einer besagten mindestens einen Lichtquelle (50) gegenüber der mindestens einen Kennung (20), und Integrieren (STP3) der besagten Steuerverbindung (45) in die lichtdurchlässige Schale (16).

16. Verfahren nach Anspruch 15,
**dadurch gekennzeichnet, dass** das Herstellen mindestens einer Kennung (20) an einer Außenseite (35) der lichtdurchlässigen Schale (16) die folgenden Schritte umfasst:
- Lackieren (STP1.1) zumindest eines Teils der Außenseite (35) mit einer nicht lichtdurchlässigen Farbe (85),
- lokales Entfernen (STP1.2) der Farbe (85) durch Lasergravur, um mindestens ein Zeichen der mindestens einen Kennung (20) zu bilden, oder Entfernen (STP1.3) der Farbe (85) in einem Bereich (86) und Anbringen (STP1.5) einer Folie (87) mit einer die mindestens eine Kennung bildenden Gravur in diesem Bereich (86) und an der Außenseite (35).

## Claims

1. Control handle (10) comprising a hollow body (15), said control handle (10) comprising a plurality of control components (13), said control handle (10) includes at least one identifier (20) for visually identifying at least one control component (13),
**characterised in that** said body (15) includes a translucent casing (16), which is translucent in at least one translucent portion (161) to be illuminated, said translucent casing (16) being interposed between an internal environment (INT) delimited by said body (15) and an external environment (EXT) situated outside the control handle (10), said at least one identifier (20) facing an external face (35) of the translucent casing (16), said control handle (10) comprising a backlighting device (40) comprising at least one light source (50), said at least one light source (50) being disposed inside said translucent casing (16) or on an internal face (36) of the translucent casing (16) so as to illuminate said at least one identifier (20) via said at least one translucent portion (161), said external face (35) being opaque outside said at least one identifier (20), said backlighting device (40) comprising at least one control link (45) connected to said at least one light source (50), said control link (45) being integrated in the translucent casing (16), said control link (45) being configured to activate said at least one light source (50) on demand.

2. Control handle according to claim 1,
**characterised in that** said control handle (10) comprises a least two identifiers (20), said backlighting device (40) includes at least one said light source (50) per identifier (20), the light source being connected to said control link (45).

3. Control handle according to either one of claims 1 or 2,
**characterised in that** said at least one light source (50) includes at least one light emitting diode (65), surface mounted on the internal face (36) of the translucent casing (16), said at least one control link (45) comprising at least one electrically conducting track (66) integrated in the translucent casing (16).

4. Control handle according to any one of claims 1 to 3,
**characterised in that** said at least one light source (50) includes an output optical fibre (70) configured to transmit a light to the translucent casing (16), said at least one control link (45) comprising at least one optical diffuser (71) leading to the output optical fibre (70).

5. Control handle according to any one of claims 1 to 4,
**characterised in that** said translucent casing (16) comprising at least two translucent walls (17, 18) disposed next to each other and each comprising at least one translucent portion (161), said at least one control link (45) includes at least two sections (46, 47), respectively integrated in the two translucent walls (17, 18), and a connection (80) linking said two sections (46, 47).

6. Control handle according to any one of claims 1 to 4,
**characterised in that** said translucent casing (16) comprising at least two translucent walls (17, 18) each comprising at last one translucent portion, said backlighting device (40) includes at least one lighting circuit (91, 92) per translucent wall (17, 18), each lighting circuit comprising at least one said light source (50) and at least one said control link (45).

7. Control handle according to any one of claims 1 to 6,
**characterised in that** said at least one control link (45) includes a connector (75) configured to be connected to a network not belonging to said control handle.

8. Control handle according to any one of claims 1 to 7,
**characterised in that** said external face (35) is partially painted with a non-translucent paint (85) at least at said at least one translucent portion, said at least one identifier (20) being formed in an unpainted region (86) of said at least one translucent portion.

9. Control handle according to claim 8,
**characterised in that** at least one plate (87) comprises an etching (88) passing right through the plate (87) in a direction (DIR) of thickness, said etching (88) representing a said identifier (20), said plate (87) being disposed in said at least one region (86).

10. Control handle according to claim 8,
**characterised in that** said at least one unpainted region (86) forms at least one character of said at least one identifier (20).

11. Control handle according to any one of claims 1 to 10,
**characterised in that** said at least one translucent portion includes white translucent polycarbonate.

12. Control handle according to any one of claims 1 to 11,
**characterised in that** said body (15) is provided with a foot (11) extended by a head (12), said head (12) and said foot (11) each including at least one said control component (13) and at least one identifier (20) backlit by the backlighting device (40).

13. Vehicle (1),
**characterised in that** the vehicle includes a control handle (10) according to any one of claims 1 to 12.

14. Vehicle according to claim 13,
**characterised in that** said vehicle (1) is a rotary wing aircraft (100), which includes a rotor (4) at least contributing to the lift of this rotary wing aircraft (100), said control handle is arranged on a controller, said controller (2) being a cyclic pitch stick configured for cyclic modification of a pitch of blades (5) of said rotor (4) or a collective pitch lever configured for collective modification of said pitch.

15. Method for producing a control handle (10) according to any one of claims 1 to 12 comprising the following steps:
- creation (STP1) of at least one identifier (20) on an external face (35) of said translucent casing (16),
- arrangement (STP2) of a said at least one light source (50) facing said at least one identifier (20), and integration (STP3) of said control link (45) in said translucent casing (16).

16. Method according to claim 15,
**characterised in that** said creation of at least one identifier (20) on an external face (35) of said translucent casing (16) includes the following steps:
- at least partial painting (STP1.1) of the external face (35) with a non-translucent paint (85),
- local removal (STP1.2) of said paint (85) by laser etching so as to form at least one character of said at least one identifier (20), or removal (STP1.3) of the paint (85) in a region (86) and arrangement (STP1.5) in said region (86) and against the external face (35) of a plate (87) comprising an etching forming said at least one identifier.
